Europäisches Patentamt

European Patent Office

Office européen des brevets

(19)

(11) EP 0 667 265 B1

(12) FASCICULE DE BREVET EUROPEEN

(45) Date de publication et mention
de la délivrance du brevet:
**27.08.1997 Bulletin 1997/35**

(51) Int. Cl.$^6$: **B60S 1/08**, G10K 11/02

(21) Numéro de dépôt: 95101261.6

(22) Date de dépôt: 31.01.1995

(54) **Paroi composite, notamment pare-brise pour véhicule automobile, comportant un dispositif de détection ultrasonore pour la détection de corps étrangers sur une de ses faces**

Schichtenwand, insbesondere Windschutzscheibe für Kraftfahrzeuge, mit einer Ultraschalldetektionsvorrichtung zur Detektion von Fremdkörpern auf einer von ihren Seiten

Composite wall, in particular a windscreen for a car, comprising an ultrasonic detector for detecting foreign bodies on one of its faces

(84) Etats contractants désignés:
**CH DE ES FR GB IT LI NL SE**

(30) Priorité: **08.02.1994 FR 9401403**

(43) Date de publication de la demande:
**16.08.1995 Bulletin 1995/33**

(73) Titulaire: **ASULAB S.A.**
**CH-2501 Bienne (CH)**

(72) Inventeurs:
• **Saurer, Eric**
**CH-2022 Bevaix (CH)**

• **Mignot, Jean-Pierre**
**CH-2034 Peseux (CH)**
• **Jeanmonod, Roland**
**CH-2000 Neuchâtel (CH)**

(74) Mandataire: **Patry, Didier Marcel Pierre et al**
**I C B,**
**Ingénieurs Conseils en Brevets S.A.**
**Rue des Sors 7**
**2074 Marin (CH)**

(56) Documents cités:
EP-A- 0 512 653          WO-A-94/00319
DE-A- 3 528 009

## Description

L'invention concerne une paroi composite, et plus particulièrement un pare-brise pour véhicule automobile, comportant un dispositif ultrasonore pour la détection de corps étrangers présents sur une partie déterminée de l'une de ses faces, la paroi composite présentant une structure telle qu'elle permet d'augmenter la sensibilité du dispositif de détection.

On connaît déjà différents dispositifs pour détecter la présence de corps étrangers présents à la surface d'une paroi. Le plus souvent, on tire parti du fait que la transmission d'une onde électromagnétique ou élastique dans le matériau de la paroi se trouve affectée par une modification du milieu dans lequel la paroi se trouve.

Ainsi, dans le cas du pare-brise d'un véhicule automobile, l'amplitude d'un signal ultrasonore qui se réfléchit à la surface d'un élément de celui-ci peut être plus ou moins atténuée en fonction de la présence d'un corps étranger à la surface dudit élément du pare-brise. La détection de cette variation d'amplitude est donc représentative de la présence de corps étrangers à la surface du pare-brise et permet en conséquence de fournir un signal de commande exploitable, par exemple pour enclencher ou déclencher un dispositif de nettoyage.

La demande de brevet EP 0 512 653 propose un dispositif de nettoyage à commande automatique, notamment pour pare-brise de véhicule automobile, qui utilise ce principe et dans lequel un transducteur ultrasonore réalisant les fonctions d'émission et de réception est directement collé sur la surface intérieure d'un pare-brise.

Ce dispositif fonctionne de façon satisfaisante lorsqu'il est associé à des pare-brises dits symétriques, c'est-à-dire comportant deux plaques de verre de même épaisseur assemblées par une couche de liaison telle qu'une couche de polyvinylbutadiène (PVB).

En effet, lorsqu'un transducteur met en vibration deux plaques de verre réunies par une couche de liaison (couche de PVB), il est nécessaire, pour obtenir une sensibilité satisfaisante pour la détection de corps étrangers présents à la surface de la plaque de verre éloignée du transducteur, que l'amplitude de la vibration de cette plaque de verre soit maximale. Cette condition n'est réalisée que si la fréquence f de l'onde émise par le transducteur est sensiblement égale à l'une des fréquences de résonance de chacune des plaques de verre constituant le pare-brise. Ainsi, pour une plaque i d'épaisseur $e_i$, f doit être proche de l'une des fréquences :

$$f_{i,K} = K \cdot v/2e_i, \tag{1}$$

où $f_{i,K}$ représentent les fréquences de résonance d'ordre K (K = 1, 2, 3, ..., n) de la plaque i, et v est la vitesse de l'onde émise par le transducteur dans le verre considéré.

On comprend donc qu'il est aisé, dans le cas d'un pare-brise symétrique, de choisir un transducteur émettant un signal dont la fréquence est adaptée à ce pare-brise puisque les épaisseurs des deux plaques de verre formant le pare-brise sont identiques. En revanche, les conditions optimales de fonctionnement d'un tel dispositif ne sont plus aussi facilement remplies dès que le transducteur est appliqué sur un pare-brise dit asymétrique, c'est-à-dire comportant deux plaques de verre d'épaisseurs différentes. Dans ce cas, pour satisfaire les conditions ci-dessus, il faut trouver un transducteur dont la fréquence f est sensiblement égale à :

$$f_1 = K_1 \cdot v/2e_1 \text{ et à } f_2 = K_2 \cdot v/2e_2$$

où $K_1$ et $K_2$ sont des nombres entiers non nuls, et $e_1$, $e_2$ sont les épaisseurs respectives des deux plaques de verre, $f_1$ et $f_2$ étant dans ce cas des harmoniques d'ordre supérieur des fréquences de résonance respectives des deux plaques.

Compte tenu de l'ordre de grandeur des épaisseurs des plaques utilisées dans un grand nombre d'applications (2 à 3 mm), on s'est aperçu que ces conditions étaient généralement satisfaites pour des fréquences élevées correspondant à des harmoniques d'ordre 4 à 5 de ces fréquences de résonance (typiquement de l'ordre de 5 à 10 Mhz).

Le raisonnement ci-dessus fait toutefois abstraction de la couche de liaison qui, de par le matériau qui la compose, absorbe une grande partie des ondes ultrasonores qui la traversent, et ce d'autant plus que la fréquence est élevée. Cette couche de liaison empêche donc un couplage satisfaisant des deux plaques de sorte qu'elle ne permet pas d'atteindre une sensibilité optimale pour la détection des corps étrangers présents à la surface de la plaque la plus éloignée du transducteur.

Un autre inconvénient de cette couche de liaison réside dans le fait que la vitesse de propagation d'une onde ultrasonore dans le matériau (PVB) qui la compose varie de façon très importante avec la température, si bien qu'il est impossible de trouver une fréquence f satisfaisant l'équation (1) pour les plaques et la couche de liaison et pour une gamme de températures d'utilisation intéressante d'un point de vue pratique.

Encore un autre inconvénient de cette couche de liaison réside dans le fait que l'impédance acoustique Z du matériau constituant la couche de liaison ($Z_{PVB} = 2 \cdot 10^6$ Kg/m$^2$.s) est très éloignée de celle des plaques ($Z_{verre} = 15 \cdot 10^6$ Kg/m$^2$.s), de sorte que la transmission du signal ultrasonore aux interfaces plaque-couche de liaison et couche de liaison-plaque est faible.

A noter aussi que l'utilisation de fréquences élevées présente l'inconvénient de nécessiter l'emploi de transducteurs fins, qui sont par conséquent fragiles et délicats à manipuler.

Ainsi, l'invention a pour but principal de remédier aux inconvénients de l'art antérieur susmentionné en fournissant une paroi composite comportant un dispositif de détection ultrasonore de corps étrangers présents sur une de ses faces, ce dispositif présentant une sensibilité de détection améliorée, et ceci que la paroi présente une structure symétrique ou asymétrique.

A cet effet l'invention a pour objet une paroi composite comprenant au moins une première plaque ayant une première épaisseur, une deuxième plaque ayant une deuxième épaisseur, lesdites plaques étant séparées par une couche intermédiaire ayant une troisième épaisseur, ladite paroi comprenant en outre un dispositif de détection ultrasonore coopérant avec une face extérieure de ladite deuxième plaque pour détecter la présence de corps étrangers sur une face extérieure de ladite première plaque, ledit dispositif de détection comprenant des moyens transducteurs pouvant émettre un signal ultrasonore incident ayant une fréquence f, lesdits moyens transducteurs pouvant en outre recevoir un signal ultrasonore réfléchi sur ladite face de ladite première plaque représentatif de la présence ou de l'absence desdits corps étrangers, caractérisée en ce que la couche intermédiaire comporte, au moins en regard des moyens transducteurs, un logement dans lequel est disposé un élément intercalaire dont les deux faces opposées sont respectivement en contact étroit avec la première et la deuxième plaque, en ce que la fréquence f des moyens transducteurs satisfait les relations suivantes:

$$f \approx K_1 . V_1/2e_1 \approx K_2 . V_2/2e_2 \approx K_3 . V_3/2e_3,$$

où $K_1$, $K_2$, et $K_3$ sont des nombres entiers non nuls, $e_1$, $e_2$, et $e_3$ sont respectivement l'épaisseur de la première plaque, de la deuxième plaque et de l'élément intercalaire, et $V_1$, $V_2$ et $V_3$ sont respectivement la vitesse de propagation d'une onde ultrasonore dans la première plaque, dans la deuxième plaque et dans l'élément intercalaire.

Ainsi, la transmission de l'onde ultrasonore de fréquence f émise par le transducteur s'effectue à travers trois cavités qui résonnent à cette fréquence, si bien que la sensibilité du dispositif de détection est grandement améliorée.

En outre, l'invention permet de choisir aisément un transducteur émettant une signal dont la fréquence est optimale quelles que soient les épaisseurs de chacune des couches formant la paroi composite.

Selon un aspect de l'invention, les première et deuxième plaques sont réalisées en des matériaux ayant des impédances acoustiques sensiblement équivalentes, le matériau de l'élément intercalaire présentant une impédance acoustique dont la valeur est comprise entre environ 0,6 et environ 1,7 fois la valeur de celle des première et deuxième plaques.

La transmission du signal engendré par le transducteur se fait ainsi avec un minimum de perte par réflexion aux interfaces des couches formant la paroi composite, de sorte que la sensibilité du dispositif est encore améliorée.

Selon une caractéristique avantageuse de l'invention, le matériau de l'élément Intercalaire est malléable, si bien que l'élément intercalaire s'adapte aisément à une éventuelle courbure de la paroi composite.

D'autres caractéristiques et avantages de l'invention apparaîtront plus clairement à la lecture de la description qui suit d'un mode de réalisation de l'invention donné à titre purement illustratif et non limitatif, cette description étant faite en liaison avec le dessin dans lequel:

- la figure 1 montre un schéma de principe d'un exemple de système de nettoyage d'un pare-brise à commande automatique avec lequel le dispositif de détection de l'invention peut être utilisé; et
- la figure 2 est une représentation schématique en coupe d'un premier mode de réalisation d'une paroi composite selon l'invention; et
- la figure 3 est une représentation schématique en coupe d'un deuxième mode de réalisation d'une paroi composite selon l'invention.

La description de l'invention va être faite dans le cadre d'une application à l'élimination de corps étrangers humides tels que la pluie, la neige, la boue, etc., présents à la surface d'une paroi composite constituée par un pare-brise à structure asymétrique pour véhicules automobiles.

Par pare-brise à structure asymétrique, on comprendra dans la suite de la description une paroi composite comprenant au moins une première plaque ayant une première épaisseur, et une deuxième plaque ayant une deuxième épaisseur inférieure à la première, les deux plaques étant séparées par une couche intermédiaire qui est dans cet exemple continue et fait également fonction de liaison des plaques entre elles. Il va de soi que, selon une variante de l'invention, la couche intermédiaire peut être formée par un élément non solide tel que l'air, les deux plaques étant alors réunies par un cadre de liaison ou analogue.

Toutefois, il va de soi que l'invention n'est nullement limitée à cette application et qu'elle pourra être avantageusement utilisée dans le cadre de tout autre application à la détection de tout corps étranger présent sur une partie déterminée de la surface d'une paroi composite à structure symétrique ou asymétrique réalisée dans des matériaux capables de transmettre un signal ultrasonore, qu'ils soient transparents ou non. Par partie déterminée, on comprendra la partie de la surface de la paroi composite qui se trouve sensiblement en regard des moyens de détection, comme cela apparaîtra plus clairement dans la suite de la description.

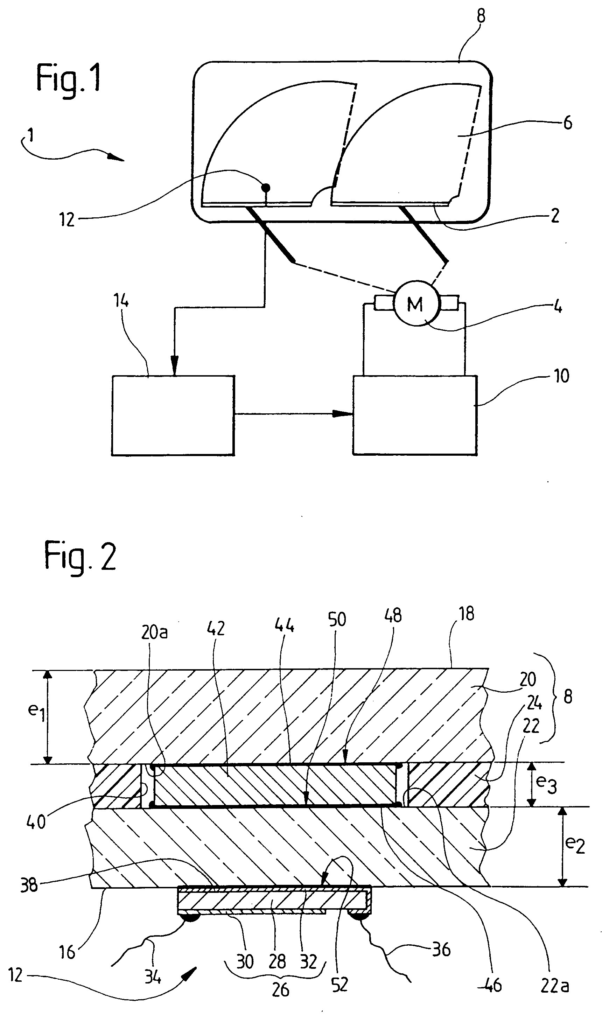

En se référant à la figure 1, on voit un système classique de nettoyage à commande automatique d'essuie-glace désigné par la référence générale 1. Le système 1 comprend des essuie-glaces 2 couplés mécaniquement à un moteur 4. Lorsque les essuie-glaces sont actionnés, ils balaient respectivement des zones 6, en forme de secteur circulaire, d'un pare-brise 8. Des moyens d'actionnement 10, connectés au moteur 4, permettent d'enclencher et de déclencher le moteur.

La commande automatique des essuie-glaces est réalisée à l'aide d'un dispositif de détection, qui sera décrit plus en détail ci-après, placé contre le pare-brise 8 en regard d'une des zones 6, et d'un circuit de commande 14 susceptible de fournir un signal de commande approprié aux moyens d'actionnement 10 en réponse à un signal électrique de détection provenant du dispositif de détection 12.

En se référant maintenant à la figure 2, on voit en coupe le dispositif de détection 12 fixé sur la face intérieure 16 du pare-brise 8 et qui est destiné à fournir un signal de détection représentatif de la présence de corps étrangers à la surface extérieure 18 du pare-brise 8.

Comme cela ressort de la figure 2, le pare-brise 8 est asymétrique, c'est-à-dire qu'il comprend une première plaque 20 ayant une première épaisseur $e_1$ et une deuxième plaque 22 ayant une deuxième épaisseur $e_2$. Les plaques 20 et 22, réalisées par exemple en verre transparent, sont assemblées au moyen d'une couche de liaison 24 continue, également transparente, qui peut être par exemple une couche d'un polymère tel que le polyvinylbutadiène (PVB). Les plaques 20 et 22 présentent dans cet exemple des caractéristiques de transmission d'une onde ultrasonore et notamment des vitesses de propagation d'une onde ultrasonore, qui sont identiques.

La première plaque 20, qui est destinée à venir en contact avec l'extérieur du véhicule, présente typiquement une première épaisseur $e_1$ de l'ordre de 2,6 mm, tandis que la deuxième plaque 22, qui est destinée à venir en contact avec l'intérieur du véhicule, présente typiquement une deuxième épaisseur $e_2$ de l'ordre de 2,1 mm. La couche de liaison présente quant à elle typiquement une épaisseur $e_3$ de l'ordre de 0,74 mm. On notera que les dimensions ont été fortement exagérées au dessin pour des raisons de clarté.

Dans ce premier mode de réalisation, le dispositif de détection 12 comprend des moyens transducteurs 26 disposés sur la face intérieure 16 du pare-brise 8, qui est constituée par la face externe de la plaque 22, et utilisés, d'une part, pour émettre un signal ultrasonore incident ayant une fréquence f dans l'épaisseur du pare-brise 8 et, d'autre part, pour recevoir un signal ultrasonore réfléchi représentatif de la présence ou de l'absence de corps étrangers sur la face extérieure 18 du pare-brise 8, qui est constituée par la face externe de la plaque 20.

Les moyens transducteurs 26 comprennent un élément piézo-électrique 28, par exemple en forme de pastille, et des électrodes d'excitation 30, 32 destinées à être respectivement reliées au circuit de commande 14 par des conducteurs 34, 36. L'électrode 30 s'étend sur la totalité de la face de l'élément piézo-électrique 28 qui se trouve en regard du pare-brise 8, qui est dite face émettrice/réceptrice 38, et sur une partie de la face opposée dudit élément 28 pour faciliter son raccordement. L'électrode 32, isolée de l'électrode 30, recouvre quant à elle la partie de ladite face opposée non recouverte par l'électrode 30.

La couche intermédiaire ou couche de liaison 24 comporte, selon l'invention, un logement 40 situé en regard des moyens transducteurs 26, dans lequel est disposé un élément intercalaire 42 dont les deux faces opposées 44, 46 sont respectivement en contact intime avec les faces en regard 20a, 22a des plaques 20 et 22. L'élément intercalaire 42 a la configuration d'une pastille dont l'épaisseur est sensiblement égale à l'épaisseur de la couche intermédiaire 24 constituée, dans l'exemple représenté, par la couche de PVB du pare-brise fini, ou encore en d'autres termes à la valeur d'écrasement de la couche de PVB 24.

Par ailleurs la surface de l'élément intercalaire 42 est de préférence sensiblement égale à la surface active de la pastille piézo-électrique 28.

Par contact intime de l'élément intercalaire 42 avec les plaques 20 et 22, on entend qu'aucune bulle d'air ne doit être présente aux interfaces plaque 20/élément intercalaire 42 et élément intercalaire 42/plaque 22.

A cet effet, l'élément intercalaire 42 est recouvert sur ses faces 44 et 46 d'un mince film 48, 50 d'une matière adhésive. De préférence, cette matière adhésive est une matière adhésive thermofusible ayant une température de fusion inférieure à la température de ramollissement de la matière de la couche 14, ou même qui présente un état quasi liquide à cette température de ramollissement. A titre d'exemple, cette matière thermofusible peut être un polymère à base d'acétate vinylique.

Les épaisseurs des couches 48, 50 de matière adhésive doivent être aussi faibles que possible pour éviter les réflexions parasites et une trop grande absorption du signal ultrasonore émis par le transducteur 28 au niveau des interfaces plaque 20/élément intercalaire 42 et élément intercalaire 42/plaque 22. La demanderesse a constaté que l'utilisation de couches de matière adhésive 48, 50 ayant des épaisseurs respectives inférieures ou égales à $\lambda/20$, où $\lambda$ est la longueur d'onde dudit signal ultrasonore de fréquence f dans la matière adhésive, conduit à des résultats satisfaisants.

On notera à ce propos que les bords latéraux de l'élément intercalaire 42 ne sont pas totalement en contact avec les parois internes du logement 40 et qu'il existe un espace autour de l'élément 42 dans lequel la matière adhésive en excès peut être recueillie.

On remarquera également à ce propos que le moyens transducteurs 26 sont fixés sur la face 16 de la plaque 22 au moyen d'un film de colle 52 ou par tout autre moyen approprié tel que le soudage, et que la condition mentionnée ci-dessus en liaison avec les couches de matière adhésive 48 et 50 s'applique aussi à l'épaisseur de la couche 52.

Selon l'invention et pour obtenir une bonne sensibilité du dispositif de détection, la fréquence f du signal émis par le transducteur 28 doit satisfaire les relations suivantes:

$$f \approx K_1 . V_1/2e_1 \approx K_2 . V_2/2e_2 \approx K_3 . V_3/2e_3,$$

où $K_1$, $K_2$, et $K_3$ sont des nombres entiers définis, $e_1$, $e_2$, et $e_3$ sont respectivement les épaisseurs de la plaque 20, de la plaque 22 et de l'élément intercalaire 42, et $V_1$, $V_2$ et $V_3$ sont respectivement les vitesses de propagation d'une onde ultrasonore dans la plaque 20, dans la plaque 22 et dans l'élément intercalaire 42.

Dans l'exemple illustré, les valeurs de $e_1$, $e_2$ et $e_3$ étant imposées par l'application, en l'occurrence à un pare-brise, les vitesses $V_1$ et $V_2$ étant également imposées par la nature du matériau (verre) des plaques 20 et 22, les équations ci-dessus permettent de choisir des valeurs de $K_1$ et $K_2$ vérifiant la relation suivante:

$$K_1 . V_1/2e_1 \approx K_2 . V_2/2e_2$$

et par là-même de déterminer une fréquence f pour laquelle les plaques 20 et 22 résonnent, et ainsi de choisir le transducteur 28. Connaissant l'épaisseur $e_3$, il ne reste donc plus qu'à sélectionner un matériau pour l'élément intercalaire 42 pour lequel la vitesse de propagation d'une onde ultrasonore dans ce matériau $V_3$ vérifie la relation suivante:

$$V_3 \approx 2f.e_3/K_3 \tag{2}$$

Pour ce faire, et pour augmenter davantage l'efficacité du dispositif de détection ultrasonore du pare-brise, on choisira de préférence pour l'élément intercalaire un matériau qui présente une impédance acoustique dont la valeur est comprise entre environ 0,6 et environ 1,7 fois la valeur de celles des plaques 20 et 22.

En ce qui concerne les plaques 20 et 22 on choisira, aussi de façon avantageuse comme c'est le cas ici, des matériaux qui présentent des impédances acoustiques sensiblement équivalentes.

Dans l'application décrite, on veillera en outre, pour des raisons liées à la fabrication d'un pare-brise, à ce que l'élément intercalaire soit malléable pour épouser la courbure du pare-brise à sa fabrication.

Pour fixer les idées, pour un pare-brise du commerce tel que celui décrit ci-dessus on a:

$$e_1 = 2,6mm, \; e_2 = 2,1mm, \; e_3 = 0,74mm,$$

$$V_1 = V_2 = V_{verre} = 5,9 \times 10^3 \text{ m/s, et}$$

$$Z_{verre} = 15 \times 10^6 \text{ Kg/m}^2 \cdot \text{s.}$$

La fréquence f et le matériau de l'élément intercalaire peuvent être déterminés de la façon suivante:

$$f \approx K_1 . V_{verre}/2e_1 \approx K_2 . V_{erre}/2e_2 \text{ d'où } K_2/K_1 \approx e_2/e_1 \approx 0,8 \approx 4/5.$$

En choisissant $K_1 = 5$ et $K_2 = 4$, on trouve une valeur de $f \approx 5,65$ Mhz pour les épaisseurs $e_1$ et $e_2$ ci-dessus. Selon l'équation (2) on tire donc

$$V_{mat. \, interc.} = 4,18/K_3 . 10^3 \text{ m/s,}$$

et en choisissant $K_3 = 2$ on a donc:

$$V_{mat. \, interc.} = 2,1 . 10^3 \text{ m/s.}$$

Cette valeur de vitesse permet ainsi de choisir dans une table un matériau approprié, par exemple le plomb, dans lequel la valeur de la vitesse de propagation d'une onde ultrasonore est égale à $2,16 . 10^3$ m/s.

En outre, la valeur de l'impédance acoustique du plomb $Z_{plomb} = 25$ Kg/m$^2 \cdot$ s correspond à environ 1,7 fois la valeur de l'impédance acoustique du verre ce qui donne une transmission du signal aux interfaces verre/plomb et plomb/verre satisfaisante (de l'ordre de 70%). De plus, le plomb est un matériau malléable qui convient parfaitement à l'exemple d'application décrit.

Bien entendu d'autres matériaux peuvent être choisis pour l'élément intercalaire pour cette application. Ainsi, la déposante a constaté que, pour obtenir de bons résultats, on choisira de préférence ce matériau dans l'ensemble comprenant l'aluminium, l'étain, le bismuth, l'indium, le plomb et leurs alliages, les alliages plomb-argent, et les alliages étain-argent dans lesquels l'argent entre dans une proportion comprise entre 0,5 et 15 %.

Pour d'autres applications, l'ensemble des matériaux préférés pourra bien entendu être différent.

Il va de soi que les valeurs des entiers $K_1$, $K_2$ et $K_3$ peuvent être choisies différemment pour adapter au mieux la valeur de la fréquence aux vitesses de propagation et aux impédances des matériaux disponibles et aux épaisseurs imposées par l'application désirée.

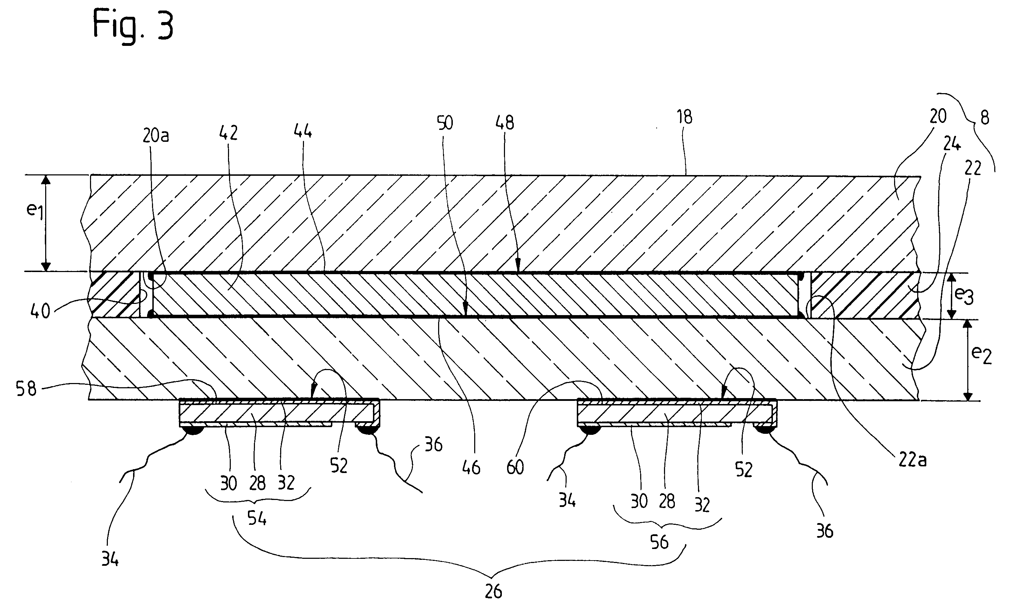

En se référant maintenant à la figure 3, on voit un deuxième mode de réalisation de l'invention dans lequel les mêmes éléments que ceux représentés aux figures 1 et 2 sont désignés par les mêmes références numériques.

A la différence du premier mode de réalisation, les moyens transducteurs 26 comprennent un premier transducteur 54 associé à un deuxième transducteur 56 qui est espacé du premier d'une distance D. Les premier et deuxième transducteurs 54, 56 ont chacun une structure analogue à celle des moyens transducteurs 26 de la figure 2. Le transducteur 52 comporte une face émettrice 58 par laquelle il émet un signal ultrasonore incident de fréquence f dans l'épaisseur du pare-brise 8. Quant au transducteur 56, il comporte une face réceptrice 60 par laquelle il reçoit le signal émis par le transducteur 54, après réflexion sur la face 18 du pare-brise 8 affectant notamment ses caractéristiques d'amplitude. Aussi dans ce deuxième mode de réalisation de l'invention l'élément intercalaire 42 s'étend entre les premier et deuxième transducteurs 54 et 56 et en regard de ceux-ci.

## Revendications

1. Paroi composite (8) comprenant au moins une première plaque (20) ayant une première épaisseur (e1), une deuxième plaque (22) ayant une deuxième épaisseur (e2), lesdites plaques étant séparées par une couche intermédiaire (24) ayant une troisième épaisseur (e3), ladite paroi (8) comprenant en outre un dispositif de détection ultrasonore (12) coopérant avec une face (16) extérieure de ladite deuxième plaque (22) pour détecter la présence de corps étrangers sur une face (18) extérieure de ladite première plaque (20), ledit dispositif de détection (12) comprenant des moyens transducteurs (26) pouvant émettre un signal ultrasonore incident ayant une fréquence f, lesdits moyens transducteurs (26) pouvant en outre recevoir un signal ultrasonore réfléchi sur ladite face (18) de ladite première plaque (20) représentatif de la présence ou de l'absence de corps étrangers, caractérisée en ce que la couche intermédiaire (24) comporte au moins en regard des moyens transducteurs (26) un logement (40) dans lequel est disposé un élément intercalaire (42) dont les deux faces opposées (44,46) sont respectivement en contact étroit avec les première et deuxième plaques (20,22), et en ce que ladite fréquence f satisfait les relations suivantes:

$$f \approx K_1 . V_1/2e_1 \approx K_2 . V_2/2e_2 = K_3 . V_3/2e_3,$$

où $K_1$, $K_2$, et $K_3$ sont des nombres entiers définis, $e_1$, $e_2$, et $e_3$ sont respectivement les épaisseurs de la première plaque (20), de la deuxième plaque (22) et de l'élément intercalaire (42), et $V_1$, $V_2$ et $V_3$ sont respectivement les vitesses de propagation d'une onde ultrasonore dans la première plaque, dans la deuxième plaque (22) et dans l'élément intercalaire.

2. Paroi composite selon la revendication 1, caractérisée en ce que lesdites première et deuxième plaques (20,22) sont réalisées en un matériau ayant des impédances acoustiques sensiblement équivalentes, et en ce que le matériau de l'élément intercalaire (42) présente une impédance acoustique dont la valeur est comprise entre environ 0,6 et environ 1,7 fois la valeur de celle des première et deuxième plaques.

3. Paroi composite selon la revendication 1 ou 2, caractérisée en ce que le matériau de l'élément intercalaire (42) est malléable.

4. Paroi composite selon l'une des revendications 1 à 3, caractérisée en ce que lesdites première et deuxième plaques (20,22) sont réalisées en verre, en ce que la couche intermédiaire (24) est une couche de liaison et en ce que le matériau de l'élément intercalaire (42) est choisi dans l'ensemble de matériaux comprenant l'aluminium, l'étain, le bismuth, l'indium, le plomb et leurs alliages, et les alliages plomb-argent, les alliages étain-argent dans lesquels l'argent entre dans des proportions comprises entre 0,5 et 15 %.

5. Paroi composite selon l'une des revendications 1 à 3, caractérisée en ce que l'élément intercalaire (42) est fixé aux première et deuxième plaques (20,22) par un mince film (48,50) d'une matière adhésive ayant de préférence une épaisseur inférieure à $\lambda/20$, où $\lambda$ est la longueur d'onde dudit signal ultrasonore de fréquence f dans la matière adhésive.

6. Paroi composite selon la revendication 4 et 5, caractérisée en ce que la matière adhésive est une matière thermofusible ayant une température de fusion inférieure à la température de ramollissement de la couche de liaison (24).

**7.** Paroi composite selon l'une quelconque des revendications 1 à 6, caractérisée en ce que les moyens transducteurs (12) comprennent un unique transducteur (26) comportant une face émettrice/réceptrice (38) par laquelle lesdits signaux incident et réfléchi sont respectivement émis et reçu.

**8.** Paroi composite selon l'une quelconque des revendications 1 à 6, caractérisée en ce que les moyens transducteurs (12) comprennent un premier transducteur (52) comportant une face émettrice (58) par laquelle ledit signal incident est émis et un deuxième transducteur (54) comportant une face réceptrice (60) par laquelle ledit signal réfléchi est reçu, en ce que le premier transducteur (54) est espacé du deuxième transducteur (56), et en ce que l'élément intercalaire (42) s'étend entre les premier et deuxième transducteurs (54, 56) et en regard de ceux-ci.

**Claims**

**1.** Composite wall (8) comprising at least a first sheet (20) having a first thickness ($e_1$), a second sheet (22) having a second thickness ($e_2$), said sheets being separated by an intermediate layer (24) having a third thickness ($e_3$), said wall (8) also comprising an ultrasonic detection device (12) cooperating with an external face (16) of said second sheet (22) to detect the presence of foreign bodies on an external face (18) of said first sheet (20), said detection device (12) comprising transducer means (26) able to emit an incidental ultrasonic signal of frequence f, said transducer means (26) also being able to receive an ultrasonic signal reflected on said face (18) of said first sheet (20) representative of the presence or absence of said foreign bodies, characterized in that the intermediate layer (24) comprises, at least facing the transducer means (26), a recess (40) in which is placed an inserted element (42) whose two opposite faces (44, 46) are respectively in close contact with the first and second sheets (20, 22), in that frequence f of the transducer means (26) satisfies the following relationships :

$$f \approx K_1 . V_1/2e_1 \approx K_2 . V_2/2e_2 = K_3 . V_3/2e_3$$

where $K_1$, $K_2$ and $K_3$ are defined integers, $e_1$, $e_2$ and $e_3$ are respectively the thickness of the first sheet (20), the second sheet (22) and the inserted element (42), and $V_1$, $V_2$ and $V_3$ are respectively the propagation speeds of an ultrasonic wave in the first sheet (20), in the second sheet (22) and in the inserted element (42).

**2.** Composite wall according to claim 1, characterized in that said first and second sheets (20,22) are formed in a material with substantially equivalent acoustic impedances and in that the material of the inserted element (42) has an acoustic impedance whose value is between approximately 0.6 and approximately 1.7 times the value of that of the first and second sheets.

**3.** Composite wall according to claim 1 or 2, characterized in that the material of the inserted element (42) is malleable.

**4.** Composite wall according to one of claims 1 to 3, characterized in that said first and second sheets (20, 22) are formed of glass, in that the intermediate layer (24) is a connecting layer and in that the material of the inserted element (42) is selected from the group of materials comprising aluminium, tin, bismuth, indium, lead and their alloys, and lead-silver alloys, tin-silver alloys in which the silver proportion is between 0.5 and 15 %.

**5.** Composite wall according to one of claims 1 to 3, characterized in that the inserted element (42) is fixed to the first and second sheets (20,22) by a thin film (48,50) of an adhesive material preferably having a thickness less than $\lambda/20$, where $\lambda$ is the wavelength of said ultrasonic signal of frequency f in the adhesive material.

**6.** Composite wall according to claims 4 and 5, characterized in that the adhesive material is a thermomelting material with a fusion temperature less than the softening temperature of the connecting layer (24).

**7.** Composite wall according to any of claims 1 to 6, characterized in that the transducer means (26) comprise a single transducer element (26) comprising an emitting/receiving face (38) via which said incidental and reflected signals are respectively emitted and received.

**8.** Composite wall according to any one of the claims 1 to 6, characterized in that the transducer means (26) comprise a first transducer element (52) comprising an emitting face (58) via which said incidental signal is emitted and a second transducer element (54) comprising a receiving face (60) via which said reflected signal is received, in that

EP 0 667 265 B1

the first transducer (54) is separated from the second transducer (56), and in that the inserted element (42) extends between the first and second transducers (54,56) and facing the latter.

**Patentansprüche**

1. Verbundwandung (8), umfassend mindestens eine erste Platte (20) mit einer ersten Dicke (e1), eine zweite Platte (22) mit einer zweiten Dicke (e2), welche Platten voneinander durch eine Zwischenschicht (24) mit einer dritten Dicke (e3) getrennt sind, welche Wandung (8) ferner eine Ultraschalldetektorvorrichtung (12) umfaßt, die mit einer Außenseite (16) der zweiten Platte (22) zusammenwirkt, um das Vorhandensein von Fremdkörpern auf einer Außenseite (18) der ersten Platte (20) zu erfassen, welche Detektorvorrichtung (12) Wandlermittel (26) umfaßt, die ein auftreffendes Ultraschallsignal mit einer Frequenz f emittieren können, welche Wandlermittel (26) ferner ein auf der genannten Seite (18) der ersten Platte (20) reflektiertes Ultraschallsignal empfangen können, das repräsentativ für das Vorhandensein oder Fehlen von Fremdkörpern ist, dadurch gekennzeichnet, daß die Zwischenschicht (24) mindestens gegenüber den Wandlermitteln (26) eine Aufnahme (40) aufweist, in der ein Zwischenelement (42) angeordnet ist, dessen beide einander abgekehrte Seiten (44,46) in engem Kontakt mit der ersten bzw. zweiten Platte (20,22) sind, und daß die Frequenz f die folgenden Bedingungen erfüllt:

$$f \approx K_1 . V_1/2e_1 \approx K_2 . V_2/2e_2 = K_3 . V_3/2e_3,$$

worin $K_1$, $K_2$ bzw. $K_3$ definierte ganze Zahlen sind, $e_1$, $e_2$ bzw. $e_3$ die Dicken der ersten Platte (20), der zweiten Platte (22) bzw. des Zwischenelements (42) sind und $V_1$, $V_2$ bzw. $V_3$ die Ausbreitungsgeschwindigkeiten einer Ultraschallwelle in der ersten Platte, in der zweiten Platte (22) bzw. in dem Zwischenelement sind.

2. Verbundwandung nach Anspruch 1, dadurch gekennzeichnet, daß die erste und die zweite Platte (20,22) aus einem Material mit akustischen, im wesentlichen äquivalenten Impedanzen hergestellt sind, und daß das Material des Zwischenelements (42) eine akustische Impedanz aufweist, deren Wert zwischen etwa 0,6 und etwa 1,7 mal dem Wert jener der ersten und zweiten Platte ist.

3. Verbundwandung nach Anspruch 1 oder 2, dadurch gekennzeichnet, daß das Material des Zwischenelements (42) geschmeidig ist.

4. Verbundwandung nach einem der Ansprüche 1 bis 3, dadurch gekennzeichnet, daß die erste und die zweite Platte (20,22) aus Glas hergestellt sind, daß die Zwischenschicht (24) eine Verbindungsschicht ist und daß das Material des Zwischenelements (42) aus der Gruppe von Materialien gewählt ist, die Aluminium, Zinn, Wismut, Indium, Blei und deren Legierungen umfaßt sowie die Legierungen Blei-Silber, die Legierungen Zinn-Silber, in welchen das Silber Anteile zwischen 0,5 und 15 % hat.

5. Verbundwandung nach einem der Ansprüche 1 bis 3, dadurch gekennzeichnet, daß das Zwischenelement (42) an der ersten und der zweiten Platte (20,22) mittels eines dünnen Films (48,50) eines adhäsiven Materials befestigt ist, der vorzugsweise eine Dicke kleiner als $\lambda/20$ hat, worin $\lambda$ die Wellenlänge des Ultraschallsignals der Frequenz f in dem adhäsiven Material ist.

6. Verbundwandung nach Anspruch 4 und 5, dadurch gekennzeichnet, daß das adhäsive Material ein warmschmelzbares Material mit einer Schmelztemperatur unter der Erweichungstemperatur der Verbindungsschicht (24) ist.

7. Verbundwandung nach einem der Ansprüche 1 bis 6, dadurch gekennzeichnet, daß das Wandlermittel (12) einen einzigen Wandler (26) umfaßt, der eine Sende-/Empfangsseite (38) aufweist, über die die auftreffenden und reflektierten Signale ausgesandt bzw. empfangen werden.

8. Verbundwandung nach einem der Ansprüche 1 bis 6, dadurch gekennzeichnet, daß das Wandlermittel (12) einen ersten Wandler (52) mit einer Sendeseite (58), von der das auftreffende Signal ausgesandt wird, und einen zweiten Wandler (54) mit einer Empfangsseite (60) umfaßt, über welche das reflektierte Signal empfangen wird, und daß der erste Wandler (54) vom zweiten Wandler (56) beabstandet ist, und daß das Zwischenelement (42) sich zwischen dem ersten und dem zweiten Wandler (54,56) und diesen gegenüber erstreckt.

8

Fig.1

Fig. 2

Fig. 3

EP 0 667 265 B1